# FASCICULE DE BREVET EUROPEEN

(11) **EP 4 024 820 B1**
(45) Date de publication et mention de la délivrance du brevet: **25.12.2024**
(21) Numéro de dépôt: 21217944.4
(22) Date de dépôt: 28.12.2021
(51) Int. Cl.: H04L 41/0803

(54) **PROCÉDÉ DE CONFIGURATION D'UNE INTERFACE SÉCURISÉE ENTRE UN RÉSEAU DE TRANSPORT ET UN RÉSEAU ÉLÉMENTAIRE D'UNE PLURALITÉ DE RÉSEAUX ÉLÉMENTAIRES FÉDÉRÉS À TRAVERS LE RÉSEAU DE TRANSPORT; INTERFACE ASSOCIÉE**
VERFAHREN ZUR KONFIGURATION EINER SICHEREN SCHNITTSTELLE ZWISCHEN EINEM TRANSPORTNETZ UND EINEM ELEMENTARNETZ AUS EINER VIELZAHL VON ELEMENTARNETZEN, DIE ÜBER DAS TRANSPORTNETZ FÖDERIERT SIND; ZUGEHÖRIGE SCHNITTSTELLE
METHOD FOR CONFIGURING A SECURED INTERFACE BETWEEN A TRANSPORT NETWORK AND ONE OF A PLURALITY OF ELEMENTARY NETWORKS FEDERATED THROUGH THE TRANSPORT NETWORK; ASSOCIATED INTERFACE

(30) Priorité: 29.12.2020 FR 2014218
(43) Date de publication de la demande: 06.07.2022
(73) Titulaire: THALES, 92400 Courbevoie (FR)
(72) Inventeur: PLESKOF, Maxime, 92622 GENNEVILLIERS CEDEX (FR); VATEL, Arnaud, 92622 GENNEVILLIERS CEDEX (FR); SADOURNY, Yulen, 92622 GENNEVILLIERS CEDEX (FR)
(74) Mandataire: Lavoix

(56) Documents cités:
- CN-A- 106 027 387
- CN-A- 111 245 898
- ELAINE BARKER ET AL: "Guide to IPsec VPNs NIST SP 800-77r1", 30 June 2020 (2020-06-30), pages 1 - 166, XP061057922, Retrieved from the Internet <URL:https://nvlpubs.nist.gov/nistpubs/SpecialPublications/NIST.SP.800-77r1.pdf> [retrieved on 20200630], DOI: 10.6028/NIST.SP.800-77R1
- SHASHANK SINGH: "Cisco Guide to Harden Cisco IOS Devices Contents", 4 September 2020 (2020-09-04), pages 1 - 72, XP055841595, Retrieved from the Internet <URL:https://www.cisco.com/c/en/us/support/docs/ip/access-lists/13608-21.pdf> [retrieved on 20210916]

## Description

La présente invention concerne un procédé de configuration d'une interface sécurisée entre un réseau de transport et un réseau élémentaire appartenant à une pluralité de réseaux élémentaires fédérés à travers ledit réseau de transport.

On souhaite créer un domaine en fédérant au moins deux réseaux élémentaires en faisant transiter les communications entre ces deux réseaux élémentaires à travers un réseau de transport. De plus, on souhaite que les communications entre ces deux réseaux élémentaires se fassent de manière sécurisée.

Il est ainsi nécessaire d'établir des interfaces sécurisées entre le réseau de transport et chaque réseau élémentaire.

De telles interfaces sécurisées sont complexes à configurer puisqu'il faut intervenir d'une part sur le réseau élémentaire (depuis le réseau élémentaire) et d'autre part sur le réseau de transport (depuis le réseau de transport).

La mise en oeuvre de telles interfaces sécurisées se heurte non seulement à des contraintes techniques, mais également à des contraintes organisationnelles, puisque ces réseaux sont généralement gérés par des acteurs différents. On comprend en effet qu'il puisse y avoir des difficultés de communication ou des procédures différentes entre les techniciens qui gèrent le réseau de transport et ceux qui gèrent les réseaux élémentaires.

Les documents CN 111 245 898 et CN 106 027 387 divulguent une jonction entre un port d'un équipement d'un réseau élémentaire propre à réaliser une fonction dite « P », ou équipement P, et un port d'un équipement d'un réseau de transport (30) propre à réaliser une fonction dite « E », ou équipement E.

Le but de la présente invention est par conséquent de résoudre ce problème.

Pour cela l'invention a pour objet un procédé et un ensemble conformes aux revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- la figure 1 est une représentation schématique d'une infrastructure de communication intégrant deux interfaces selon l'invention ; et,
- la figure 2 est une représentation schématique d'un mode de réalisation du procédé selon l'invention, mis en oeuvre par l'une ou l'autre des interfaces de l'infrastructure de la figure 1.

### SYSTEM E

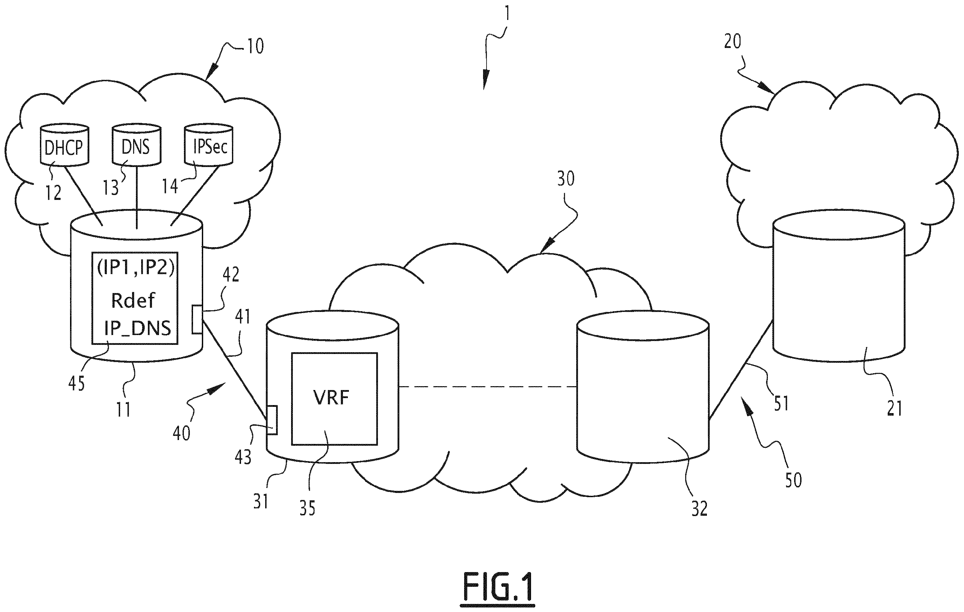

La figure 1 représente une infrastructure de communication 1 comportant un premier réseau élémentaire 10, un second réseau élémentaire 20, et un réseau de transport 30 intermédiaire entre les premier et second réseaux élémentaires 10 et 20.

Les réseaux élémentaires et de transport, 10, 20, 30, sont des réseaux de communication du type IP, de préférence selon le protocole IPv4 ou même IPv6.

Chaque réseau est constitué d'une pluralité d'équipements informatiques, constituant autant de noeuds du réseau, ces équipements étant reliés les uns aux autres de manière à constituer les liens du réseau.

Le réseau de transport 30 appartient, par exemple, à un opérateur A, tandis que les premier et second réseaux élémentaires, 10 et 20, appartiennent à un opérateur B, différent de A.

L'opérateur B souhaite fédérer les premier et second réseaux élémentaires 10, 20 au travers du réseau de transport 30, de sorte que les utilisateurs des équipements des premier et second réseaux élémentaires 10, 20 aient l'impression d'être sur un même domaine, continu, alors que, physiquement, les communications entre ces deux réseaux élémentaires 10 et 20 s'effectuent via le réseau de transport 30 sous-jacent.

Dans ce but, l'infrastructure de communication 1 comporte une première interface 40 entre le premier réseau élémentaire 10 et le réseau de transport 30, ainsi qu'une seconde interface 50 entre le second réseau élémentaire 20 et le réseau de transport 30.

La première interface 40 est constituée par une jonction 41 entre, d'une part, un premier routeur 11 du premier réseau élémentaire 10 et, d'autre part, un second routeur 31 du réseau de transport 30

De manière symétrique, la seconde interface 50 est constituée par une jonction 51 entre un premier routeur 21 du second réseau élémentaire 20 et un second routeur 32 du réseau de transport 30.

Les première et seconde interfaces 40, 50 sont identiques entre elles. En conséquence, dans ce qui suit, la description sera faite en se référant à la première interface 40, mais une description similaire pourrait être faite en se référant à la seconde interface 50.

La jonction 41 entre le premier routeur 11 et le second routeur 31 résulte d'abord de l'établissement d'un lien physique entre ces deux routeurs. Par exemple un câble Ethernet est connecté entre un port physique 42 du premier routeur 11 et un port physique 43 du second routeur 31.

Puis la jonction 41 est configurée sur ce lien physique.

Le procédé selon l'invention permet une auto-configuration de la jonction 41 à condition que les routeurs 11 et 31, à chaque extrémité de cette jonction, soient convenablement programmés.

Le premier routeur d'une interface selon l'invention, qui appartient au réseau élémentaire, est convenablement programmé de manière à présenter une fonctionnalité dénommée conventionnellement fonction P. Dans la suite, on parlera de routeur P d'une interface plutôt que de premier routeur de cette interface. Ainsi, pour la jonction 41, le routeur P est le routeur 11.

Le second routeur d'une interface selon l'invention, qui appartient au réseau de transport, est convenablement programmé de manière à présenter une fonctionnalité dénommée conventionnellement fonction E. Dans la suite on parlera de routeur E d'une interface plutôt que de second routeur de cette interface. Ainsi, pour la jonction 41, le routeur E est le routeur 31.

On notera que les équipements 11 et 31 sont, dans le présent mode de réalisation, des routeurs. Cependant, en variante, il pourrait s'agir de toute paire d'équipements informatique associant un noeud du réseau élémentaire capable de réaliser la fonction P et un noeud du réseau de transport capable de réaliser la fonction E.

Un routeur est un ordinateur comportant des moyens de calcul, tels qu'un processeur, et des moyens de mémorisation, tels qu'une mémoire. Cette dernière stocke notamment des programmes dont les instructions, lorsqu'elles sont exécutées par le processeur, permettent la mise en oeuvre de certains procédés, notamment des algorithmes de routage et tout ou partie du procédé de configuration selon l'invention.

Dans ce premier mode de réalisation, le routeur P 11 est relié à un serveur DHCP 12, un serveur DNS 13 et un serveur IPSec 14. Le routeur P 11 connaît les adresses IP de chacun de ces équipements, à savoir IP_DHCP, IP_DNS et IP_IPSec.

Le serveur DHCP 12 est standard au sens om il respecte la norme « Dynamic Host Configuration Protocol » - DHCP. Il est propre à attribuer automatiquement des adresses IP au équipements le demandant.

La serveur DNS 14 est standard au sens où il respecte la norme « Domain Name System » - DNS. Il tient à jour une table de correspondance entre des noms de domaine et des adresses IP. Selon l'invention, cette table comporte une seule entrée générique. Cette entrée générique porte un nom de domaine prédéfini par convention. Avantageusement, ce nom de domaine respecte le format « Fully Qualified Domain Name » - FQDN et est du type « hostname.domain ». Par exemple le nom de domaine est prédéfini comme «pfunction.fmn ». Dans la table de correspondance, le nom de domaine de cette entrée générique est préalablement associé à l'adresse IP du routeur IPSec, IP _IPSec.

Le routeur IPSec est propre à mettre en oeuvre un protocole de sécurisation de la communication au moyen de clés de chiffrement. Il respecte de préférence la norme « Internet Protocol Security » - IPSec, mais d'autres protocoles de chiffrement pourraient alternativement être utilisés.

Le routeur P 11 mémorise une configuration spécifique 15 de la jonction à configurer. Cette configuration spécifique 15 définit l'ensemble des paramètres permettant de monter la jonction. La configuration spécifique 15 comporte les paramètres suivants : une plage d'adresses IP, (IP1, IP2) ; une route par défaut, Rdef ; et une adresse IP pour le serveur DNS, IP_DNS. Ces paramètres correspondent aux champs des messages des standards mis en oeuvre, notamment DHCP.

Le routeur E 31 est client DHCP, client DNS et client IPSec. Il est donc propre à mettre en oeuvre les protocoles correspondants.

Pour monter une jonction particulière, le routeur E 31 n'a pas besoin d'être configuré spécifiquement. Il n'a besoin de connaitre que le nom de domaine générique « pfunction.fmn », qui est prédéfini par convention lors de la programmation initiale du routeur E.

Le routeur E 31 tient avantageusement à jour une table de routage virtuelle, (« Virtual Route Forwarding » - VRF en anglais). Cette table 35 stocke les paramètres de la jonction 41.

### PROCEDE

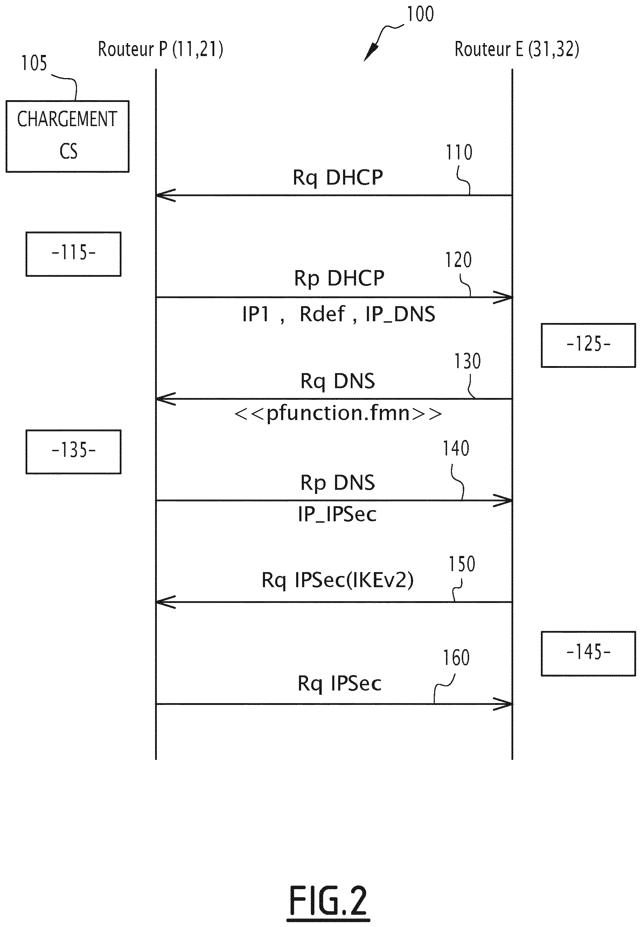

En se référant à la figure 2, un mode de réalisation du procédé de configuration selon l'invention va être présenté.

Le procédé de configuration 100 de la jonction 41 entre le routeur P 11 et le routeur E 31 est initié automatiquement dès la détection de l'établissement d'un lien physique reliant le port physique 42 du routeur P 11 et le port physique 43 du routeur E 31.

Côté routeur P 11, le procédé 100 débute, optionnellement mais de préférence, par une étape 105 au cours de laquelle le routeur P 11 charge les paramètres de la configuration spécifique 15, auprès par exemple d'un serveur de gestion centrale localisé sur le premier réseau élémentaire 10.

La configuration spécifique 15 comporte : une plage de deux adresses IP : (IP1, IP2) ; une route par défaut : Rdef ; et une adresse IP du serveur DNS : IP_DNS.

Dans ce mode de réalisation, la route par défaut Rdef pointe vers l'adresse physique du routeur P. Ainsi, par défaut, tout paquet IP sera réémis par le routeur E vers le routeur P. Il est à noter que la valeur de la route par défaut Rdef pointant vers l'adresse physique du routeur P est égale à la valeur de l'adresse IP qui va être attribuée au port 42 par la mise en oeuvre du présent procédé, à savoir IP2.

Côté routeur E 31, le procédé 100 débute par une étape 110 au cours de laquelle le routeur E 31 diffuse une requête DHCP de découverte de son environnement réseau le long du lien physique venant d'être établi.

Dans une étape 115, lors de la réception de la requête DHCP, le routeur P 11 retransmet la requête DHCP vers le serveur DHCP. Ce dernier lit la configuration spécifique 15 du routeur P 11.

Le routeur DHCP attribue alors au routeur P 11 (plus précisément au port physique 42 du routeur P 11) l'adresse IP la plus haute, par exemple l'adresse IP IP2 et attribue au routeur E 31 (plus précisément au port physique 43 du routeur E 31) l'adresse IP restante, qui est l'adresse IP la plus basse, ici l'adresse IP IP1.

Dans une étape 120, le routeur DHCP répond à la requête DHCP en émettant une réponse DHCP vers le routeur E 31, via le routeur P 11. Cette réponse DHCP utilise les champs du protocole DHCP pour communiquer : dans un premier champ, une adresse IP attribuée au routeur E, ici IP1 ; dans un second champ, une route par défaut, ici Rdef ; et dans un troisième champ, une adresse IP d'un serveur DNS, ici IP_DNS.

Par simplification, seules les phases du protocole DHCP utiles à la méthode sont représentées sur la figure 2.

Ainsi, à l'étape 125, le routeur E 31 reçoit la réponse DHCP et mémorise les paramètres extraits des différents champs de cette réponse DHCP et met à jour la table 35.

Le port physique du routeur E 31 possède maintenant une adresse IP, ici IP1.

Le routeur E 31 sait qu'il convient de router tout paquet IP dont il ne détient pas la destination dans sa table de routage virtuelle 35 selon la route par défaut de cette table, ici Rdef.

Enfin le routeur E 31 connaît l'adresse IP d'un serveur DNS, ici IP_DNS.

Cependant, à ce stade, le routeur E 31 ne connait pas l'adresse IP à laquelle il peut trouver la fonctionnalité de sécurisation, c'est-à-dire l'adresse IP du serveur IPsec. Pour la connaître, le routeur P 31 va interroger le serveur DNS en utilisant le nom de domaine générique « pfunction.fmn ».

Ainsi, à l'étape 130, le routeur E 11 émet une requête DNS à destination du serveur DNS en utilisant l'adresse IP_DNS. Cette requête DNS utilise les champs du protocole DNS pour communiquer : dans un champ principal, le nom de domaine générique que le routeur E cherche à résoudre « pfunction.fmn ».

A l'étape 135, lors de la réception de la requête DNS, le routeur P 11 retransmet la requête DNS vers le serveur DNS. Ce dernier résout le nom de domaine « pfunction.fmn » reçu, en extrayant de sa table de correspondance l'adresse IP du serveur IPsec, ici IP_IPSec.

Dans une étape 140, le serveur DNS émet une réponse DNS vers le routeur E 11 via le routeur P 11. Cette réponse DNS comporte comme champ, l'adresse IP du pair IPsec, IP_IPsec.

Ainsi, à l'étape 145, le routeur E 31 reçoit la réponse DNS et mémorise l'adresse IP contenu dans cette réponse.

Une fois que le routeur E 31 connaît l'adresse IP du port IPsec, une négociation IPsec peut être initiée par serveur E 31 et le serveur IPSec via le routeur P 11.

Ainsi, par exemple et de manière schématique, dans une étape 150, le routeur E 31 initie une première phase d'échange de clés selon le protocole IKEv2 en émettant une requête IKEv2 vers le routeur IPSec via le routeur P 11.

Dans l'étape 160, le routeur IPSec répond, via le routeur P 11 et initialise le tunnel IPsec. Dans ce premier mode de réalisation, les extrémités de ce tunnel sont les ports physiques des routeurs P et E.

Ainsi, à l'issue de l'exécution du procédé 100, la jonction 41 est configurée, le routeur E 11 ayant automatiquement appris du routeur P 11 l'ensemble des informations nécessaires au montage de cette jonction en utilisant des protocoles connus mais détournés à cette fin.

Une fois les première et seconde interfaces configurées par la mise en oeuvre du procédé 100, l'échange sécurisé de paquets IP peut avoir lieu entre les premier et second réseaux élémentaires 10, 20 à travers une liaison tunnel établie préalablement à travers le réseau de transport 30, par d'autres mécanismes.

### VARIANTES DE REALISATION

En variante de ce mode de réalisation, le routeur P 11 intègre une fonctionnalité de serveur DHCP. C'est donc le routeur P 11 qui gère les étapes DHCP du procédé selon l'invention.

Dans une autre variante, indépendante de la précédente, le routeur P 11 intègre une fonctionnalité de serveur DNS. Le routeur P 11 gère alors lui-même les étapes DNS du procédé selon l'invention. Dans ce cas l'adresse IP, IP_DNS, n'est autre que l'adresse IP2 du port physique 42 du routeur P 11.

Dans encore une autre variante, indépendante des précédentes, le routeur P 11 intègre une fonctionnalité de serveur IPSec. Le routeur P 11 gère alors lui-même les étapes de chiffrement du procédé selon l'invention. Dans ce cas, l'adresse IP, IP _IPSec, n'est autre que l'adresse IP2 du port physique 42 du routeur P 11.

Il est à noter que le mode de réalisation préféré consiste en un routeur P intégrant les fonctionnalités de serveur DHCP, DNS et IPSec, c'est-à-dire la colocalisation des différentes fonctions sur le routeur P.

Dans encore une autre variante, indépendante des précédentes, l'adresse IP attribuée au routeur P désigne un port virtuel du routeur P et non pas un port physique de celui-ci. Ceci permet notamment de mettre en oeuvre un mécanisme de rebouclage ou « Loopback » en anglais. Un tel mécanisme est particulièrement avantageux lorsque plusieurs jonctions, issues d'autant de ports physiques du routeur P, doivent être configurées automatiquement par la mise en oeuvre du procédé selon l'invention. Dans ce cas, la route par défaut Rdef permet au routeur E d'atteindre le mécanisme de rebouclage du routeur P afin d'obtenir les informations d'auto-configuration. Le routeur P sait quant à lui à quoi correspond ce port virtuel et vers quelles fonctionnalités adresser les requêtes incidentes.

Si plusieurs jonctions sont issues d'un routeur E, les caractéristiques de chacune de ces jonctions sont mémorisées dans la table de routage virtuelle du routeur E.

### AVANTAGES

Grâce au mécanisme décrit ci-dessus, les deux équipements d'une jonction sont en mesure de communiquer entre eux sans avoir à intervenir préalablement sur l'équipement côté réseau de transport. Le procédé selon l'invention ne requiert donc aucune configuration spécifique ou modification du routeur E du réseau de transport. Chaque routeur E embarque une configuration générique permettant l'autoconfiguration. Cette configuration est la même pour tous les équipements réalisant la fonction E, là où la configuration est spécifique pour chaque équipement réalisant la fonction P. L'ensemble des paramètres requis pour la configuration de la jonction est porté par le routeur P. La jonction peut donc être établie par l'opérateur B des réseaux élémentaires à fédérer sans intervention de l'opérateur A du réseau de transport, au-delà de la mise à disposition des équipements présentant la fonction E.

La mise en oeuvre du procédé selon l'invention permet donc une configuration automatique (« plug and play ») d'une jonction, là où traditionnellement, la configuration doit se faire de part et d'autre de la jonction, ce qui est complexe et multiplie les probabilités d'erreurs.

L'homme du métier constatera que le procédé selon l'invention se fonde entièrement sur la mise en oeuvre de standards connus, avantageusement ceux définis par l'« Internet Engineering Task Force » - IETF. Par conséquent, ce procédé constitue une solution standard, par opposition à une solution propriétaire qui dépendrait des équipements utilisés (mise en oeuvre de routeur Cisco, Microsoft, ou autres). Il s'agit là d'un avantage majeur, puisque la mise en oeuvre du procédé selon l'invention et sa maintenance en cas de dysfonctionnement sont maintenant indépendantes du fabriquant et des équipements sous-jacents.

La présente invention s'appuie de préférence sur le standard DHCP tel que défini dans le document RFC 2131 ; le standard DNS tel que défini dans le document RFC 8499 ; le standard IKEv2 tel que défini dans les documents RFC 7296 et 8247 ; et le standard IPSec tel que défini dans les documents RFC 8221 et 6379. Cependant, la présente invention n'utilise que des fonctionnalités de base de ces standards, fonctionnalités que l'on retrouve par conséquent d'une version à l'autre de ces standards. Ainsi, les modifications de ces standards n'impactent pas la présente invention.

Le procédé permet de répondre au problème technique sans pour autant ajouter de calculateurs supplémentaires à l'infrastructure.

La présente invention est adaptée à la mise en oeuvre d'algorithmes de segmentation, qui sont des algorithmes capables de répartir les flux de données en fonction de leurs types sur l'une ou l'autre des différentes jonctions auto-configurées issues d'un routeur E vers plusieurs routeurs P.

## Revendications

1. Procédé de configuration (100) d'une interface sécurisée (40) entre un réseau de transport (30) et un réseau élémentaire (10) appartenant à une pluralité de réseaux élémentaires (10, 20) fédérés à travers ledit réseau de transport, l'interface comportant un équipement du réseau élémentaire (10) propre à réaliser une fonction dite « P » (11), ou équipement P, un équipement du réseau de transport (30) propre à réaliser une fonction dite « E » (31), ou équipement E, et une jonction (41) entre un port (42) de l'équipement P et un port (43) de l'équipement E, l'équipement P offrant une capacité de serveur DHCP, une capacité de serveur DNS, et une capacité de serveur IPSec, et mémorisant une configuration spécifique (15) comportant l'ensemble des paramètres de la jonction à établir, notamment une plage de deux adresses IP (IP1, IP2), une route par défaut (Rdef) et l'adresse IP d'un serveur DNS (IP_DNS), le procédé consiste :
- en une étape (110) au cours de laquelle l'équipement E émet une requête DHCP ;
- en une étape (120) au cours de laquelle l'équipement P émet vers l'équipement E une réponse DHCP, ladite réponse DHCP comportant une adresse IP attribuée à l'équipement E parmi les adresses IP de la plage de deux adresses IP, la route par défaut et l'adresse IP du serveur DNS ;
- en une étape (130) au cours de laquelle l'équipement E émet vers l'équipement P une requête DNS incorporant un nom de domaine générique prédéfini ;
- en une étape (140) au cours de laquelle l'équipement P émet vers l'équipement E une réponse DNS, indiquant une adresse IP utilisée par l'équipement E pour la sécurisation de la jonction ; et,
- un ensemble d'étapes (150, 160) de sécurisation de la jonction initié par l'équipement E.

2. Procédé selon la revendication 1, dans lequel, lors de la réception de la requête DHCP, la capacité DHCP offerte par l'équipement P (11) attribue, à l'équipement P, une adresse IP parmi les adresses IP de la plage de deux adresses IP, et attribue l'autre adresse IP à l'équipement E.

3. Procédé selon l'une quelconque des revendications 1 à 2, dans lequel le nom de domaine générique prédéfini respecte le format « hostname.domain », et vaut par exemple «pfunction.fmn ».

4. Procédé selon l'une quelconque des revendications 1 à 3, dans lequel le mécanisme de sécurisation de la jonction relève d'une négociation IPSec comportant :
- une étape (150) au cours de laquelle l'équipement E initie une négociation, de préférence selon le protocole IKEv2, en émettant une requête IPsec adaptée vers l'équipement P ; et,
- une étape (160) au cours de laquelle l'équipement P répond et initialise un tunnel IPsec avec l'équipement E.

5. Procédé selon l'une quelconque des revendications 1 à 4, comportant une étape (105) préalable au cours de laquelle l'équipement P (11) charge la configuration spécifique (15) auprès d'un serveur de gestion du réseau élémentaire (10).

6. Ensemble comportant un équipement d'un réseau élémentaire (10) propre à réaliser une fonction dite « P » (11), ou équipement P, un équipement d'un réseau de transport (30) propre à réaliser une fonction dite « E » (31), ou équipement E, et une jonction (41) entre un port de l'équipement P et un port d'un équipement E, l'équipement P offrant une capacité de serveur DHCP, une capacité de serveur DNS, et une capacité de serveur IPSec, mémorisant une configuration spécifique (15) comportant l'ensemble des paramètres de la jonction à établir, notamment une plage de deux adresses IP (IP1, IP2), une route par défaut (Rdef) et l'adresse IP d'une capacité de serveur DNS (IP_DNS), les équipements E et P étant programmés pour mettre en oeuvre un procédé de configuration conforme à l'une quelconque des revendications 1 à 5 pour configurer une interface (40) entre le réseau de transport (30) et le réseau élémentaire (10) appartenant à une pluralité de réseaux élémentaires fédérés (10, 20) à travers ledit réseau de transport (30),.

7. Ensemble selon la revendication 6, dans lequel la capacité de serveur DHCP offerte par l'équipement P est réalisée par un serveur DHCP (12) du réseau élémentaire (10) connecté à l'équipement P ou par une fonctionnalité de serveur DHCP réalisée par l'équipement P ; et/ou la capacité de serveur DNS offerte par l'équipement P est réalisée par un serveur DNS (13) du réseau élémentaire (10) connecté à l'équipement P ou par une fonctionnalité de serveur DNS réalisée par l'équipement P ; et/ou la capacité de serveur IPSec offerte par l'équipement P est réalisée par un serveur IPSec (14) du réseau élémentaire (10) connecté à l'équipement P ou par une fonctionnalité de serveur IPSec réalisée par l'équipement P.

8. Ensemble selon la revendication 6 ou la revendication 7, dans lequel l'équipement E (31) mémorise les paramètres de la jonction indiqués dans les réponses de l'équipement P (11) dans une table de routage virtuelle (35).

9. Ensemble selon l'une quelconque des revendications 6 à 7, dans lequel la route par défaut permet d'accéder à un port virtuel de l'équipement P (11), un mécanisme de rebouclage étant associé audit port virtuel.

10. Ensemble selon l'une quelconque des revendications 6 à 9, dans lequel la capacité de serveur DNS offerte par l'équipement P (11) comporte une table de correspondance associant au nom de domaine générique prédéfini, l'adresse IP de la capacité de serveur IPSec.

## Patentansprüche

1. Verfahren zur Konfiguration (100) einer sicheren Schnittstelle (40) zwischen einem Transportnetz (30) und einem Elementarnetz (10), das zu einer Vielzahl von Elementarnetzen (10, 20) gehört, die über das Transportnetz föderiert sind, die Schnittstelle umfassend eine Ausrüstung des Elementarnetzes (10), die geeignet ist, um eine sogenannte Funktion "P" (11) oder Ausrüstung P zu realisieren, eine Ausrüstung des Transportnetzes (30), die geeignet ist, um eine sogenannte Funktion "E" (31) oder Ausrüstung E zu realisieren, und eine Verbindung (41) zwischen einem Port (42) der Ausrüstung P und einem Port (43) der Ausrüstung E, wobei die Ausrüstung P eine DHCP-Serverkapazität, eine DNS-Serverkapazität und eine IPSec-Serverkapazität bietet und eine spezifische Konfiguration (15) speichert, umfassend die Gesamtheit der Parameter der herzustellenden Verbindung, insbesondere einen Bereich von zwei IP-Adressen (IP1, IP2), eine Standardroute (Rdef) und die IP-Adresse eines DNS-Servers (IP_DNS), wobei das Verfahren aus Folgendem besteht:
- aus einem Schritt (110), bei dem die Ausrüstung E eine DHCP-Anforderung emittiert;
- aus einem Schritt (120), bei dem die Ausrüstung P eine OHCP-Antwort an die Ausrüstung E emittiert, die OHCP-Antwort umfassend eine IP-Adresse, die mit der Ausrüstung E assoziiert ist, aus den IP-Adressen des Bereichs von zwei IP-Adressen, die Standardroute und die IP-Adresse des DNS-Servers;
- aus einem Schritt (130), bei dem die Ausrüstung E eine DNS-Anforderung an die Ausrüstung P emittiert, die einen vordefinierten generischen Domainnamen enthält;
- aus einem Schritt (140), bei dem die Ausrüstung P eine DNS-Antwort an die Ausrüstung E emittiert, die eine IP-Adresse angibt, die von der Ausrüstung E für die Sicherung der Verbindung verwendet wird; und,
- eine Reihe von Schritten (150, 160) zur Sicherung der Verbindung, die von der Ausrüstung E eingeleitet werden.

2. Verfahren nach Anspruch 1, wobei beim Empfang der OHCP-Anforderung die von der Ausrüstung P (11) gebotene DHCP-Kapazität der Ausrüstung P eine IP-Adresse aus den IP-Adressen des Bereichs von zwei IP-Adressen zuweist und die andere IP-Adresse der Ausrüstung E zuweist.

3. Verfahren nach einem der Ansprüche 1 bis 2, wobei der vordefinierte generische Domainname das Format "hostname.domain" einhält und beispielsweise "pfunction.fmn" lautet.

4. Verfahren nach einem der Ansprüche 1 bis 3, wobei der Mechanismus zur Sicherung der Verbindung eine IPSec-Verhandlung ist, umfassend:
- einen Schritt (150), bei dem die Ausrüstung E eine Verhandlung einleitet, vorzugsweise gemäß dem Protokoll IKEv2, indem sie eine angepasste IPsec-Anforderung an die Ausrüstung P emittiert; und,
- einen Schritt (160), bei dem die Ausrüstung P antwortet und einen IPsec-Tunnel mit der Ausrüstung E initialisiert.

5. Verfahren nach einem der Ansprüche 1 bis 4, umfassend einen vorherigen Schritt (105), bei dem die Ausrüstung P (11) die spezifische Konfiguration (15) von einem Verwaltungsserver des Elementarnetzes (10) lädt.

6. Anordnung, umfassend eine Ausrüstung des Elementarnetzes (10), die geeignet ist, um eine sogenannte Funktion "P" (11) oder Ausrüstung P zu realisieren, eine Ausrüstung des Transportnetzes (30), die geeignet ist, um eine sogenannte Funktion "E" (31) oder Ausrüstung E zu realisieren, und eine Verbindung (41) zwischen einem Port der Ausrüstung P und einem Port der Ausrüstung E, wobei die Ausrüstung P eine DHCP-Serverkapazität, eine DNS-Serverkapazität und eine IPSec-Serverkapazität bietet, eine spezifische Konfiguration (15) speichert, umfassend die Gesamtheit der Parameter der herzustellenden Verbindung, insbesondere einen Bereich von zwei IP-Adressen (IP1, IP2), eine Standardroute (Rdef) und die IP-Adresse eines DNS-Servers (IP_DNS), wobei die Ausrüstungen E und P programmiert sind, um ein Konfigurationsverfahren gemäß einem der Ansprüche 1 bis 5 zu implementieren, um eine Schnittstelle (40) zwischen dem Transportnetz (30) und dem Elementarnetz (10), das zu einer Vielzahl von föderierten Elementarnetzen (10, 20) gehört, durch das Transportnetz (30) zu konfigurieren.

7. Anordnung nach Anspruch 6, wobei die von der Ausrüstung P gebotene OHCP-Serverkapazität durch einen OHCP-Server (12) des Elementarnetzes (10), der mit der Ausrüstung P verbunden ist, oder durch eine DHCP-Serverfunktionalität, die von der Ausrüstung P realisiert wird, realisiert wird; und/oder die von der Ausrüstung P gebotene DNS-Serverkapazität durch einen DNS-Server (13) des Elementarnetzes (10), der mit der Ausrüstung P verbunden ist, oder durch eine DNS-Server-Funktionalität, die von der Ausrüstung P realisiert wird, realisiert wird; und/oder die von der Ausrüstung P gebotene IPSec-Serverkapazität durch einen IPSec-Server (14) des Elementarnetzes (10), der mit der Ausrüstung P verbunden ist, oder durch eine IPSec-Serverfunktionalität, die durch die Ausrüstung P realisiert wird, realisiert wird.

8. Anordnung nach Anspruch 6 oder Anspruch 7, wobei die Ausrüstung E (31) die in den Antworten der Ausrüstung P (11) angegebenen Parameter der Verbindungsstelle in einer virtuellen Routingtabelle (35) speichert.

9. Anordnung nach einem der Ansprüche 6 bis 7, wobei die Standardroute einen Zugriff auf einen virtuellen Port der Ausrüstung P (11) ermöglicht, wobei mit dem virtuellen Port ein Loopback-Mechanismus assoziiert ist.

10. Anordnung nach einem der Ansprüche 6 bis 9, wobei die von der Ausrüstung P (11) gebotene DNS-Serverkapazität eine Entsprechungstabelle umfasst, die die IP-Adresse der IPSec-Serverkapazität mit dem vordefinierten generischen Domainnamen assoziiert.

## Claims

1. A method for configuring (100) a secured interface (40) between a transport network (30) and an elementary network (10) belonging to a plurality of elementary networks (10, 20) federated through said transport network, the interface comprising an equipment item of the elementary network (10) capable of performing a so-called "P" function (11), or P equipment, an equipment item of the transport network (30) capable of performing a so-called "E" function (31), or E equipment, and a junction (41) between a port (42) of the P equipment and a port (43) of the E equipment, the P equipment offering a DHCP server capability, a DNS server capability, and an IPSec server capability, and storing a specific configuration (15) comprising all the parameters of the junction to be established, in particular a range of two IP addresses (IP1, IP2), a default route (Rdef) and the IP address of a DNS server (IP_DNS), the method consists of:
- a step (110) during which the E equipment sends a DHCP request;
- a step (120) during which the P equipment sends the E equipment a DHCP response, said DHCP response comprising an IP address assigned to the E equipment from among the IP addresses of the range of two IP addresses, the default route and the IP address of the DNS server;
- a step (130) during which the E equipment sends the P equipment a DNS request incorporating a predefined generic domain name;
- a step (140) during which the P equipment sends the E equipment a DNS response, indicating an IP address used by the E equipment to secure the junction; and
- a set of steps (150, 160) for securing the junction initiated by the E equipment.

2. The method according to claim 1, wherein, upon receipt of the DHCP request, the DHCP capability offered by the P equipment (11) assigns, to the P equipment, an IP address from among the IP addresses in the range of two IP addresses, and assigns the other IP address to the E equipment.

3. The method according to any one of claims 1 to 2, wherein the predefined generic domain name respects the format "hostname.domain," and is for example equal to "pfunction.fmn."

4. The method according to any one of claims 1 to 3, wherein the mechanism for securing the junction is based on an IPSec negotiation comprising:
- a step (150) during which the E equipment initiates a negotiation, preferably according to the IKEv2 protocol, by sending an appropriate IPsec request to the P equipment P; and
- a step (160) during which the P equipment responds and initializes an IPsec tunnel with the E equipment.

5. The method according to any one of claims 1 to 4, comprising a prior step (105) during which the P equipment (11) loads the specific configuration (15) from a management server of the elementary network (10).

6. An assembly comprising an equipment item of an elementary network (10) capable of performing a so-called "P" function (11), or P equipment, an equipment item of a transport network (30) capable of performing a so-called "E" function (31), or E equipment, and a junction (41) between a port of the P equipment and a port of the E equipment, the P equipment offering a DHCP server capability, a DNS server capability, and an IPSec server capability, storing a specific configuration (15) comprising all the parameters of the junction to be established, in particular a range of two IP addresses (IP1, IP2), a default route (Rdef) and the IP address of a DNS server (IP_DNS), the E and P equipment items being programmed to implement a configuration method according to any one of claims 1 to 5 to configure an interface (40) between the transport network (30) and the elementary network (10) belonging to a plurality of federated elementary networks (10, 20) through said transport network (30).

7. The assembly according to claim 6, wherein the DHCP server capability offered by the P equipment is implemented by a DHCP server (12) of the elementary network (10) connected to the P equipment or by a DHCP server functionality implemented by the P equipment; and/or the DNS server capability offered by the P equipment is implemented by a DNS server (13) of the elementary network (10) connected to the P equipment or by a DNS server functionality implemented by the P equipment; and/or the IPSec server capability offered by the P equipment is implemented by an IPSec server (14) of the elementary network (10) connected to the P equipment or by an IPSec server functionality implemented by the P equipment.

8. The assembly according to claim 6 or claim 7, wherein the E equipment (31) stores the junction parameters indicated in the responses from the P equipment (11) in a virtual routing table (35).

9. The assembly according to any one of claims 6 to 7, wherein the default route makes it possible to access a virtual port of the P equipment (11), a loopback mechanism being associated with said virtual port.

10. The assembly according to any one of claims 6 to 9, wherein the DNS server capability offered by the P equipment (11) comprises a lookup table associating the IP address of the IPSec server capability with the predefined generic domain name.
